# EUROPEAN PATENT SPECIFICATION

(11) **EP 3 686 744 B1**
(45) Date of publication and mention of the grant of the patent: **10.01.2024**
(21) Application number: 18858796.8
(22) Date of filing: 03.09.2018
(51) Int. Cl.: G06F 13/00, G06F 3/0485, G06F 3/0488, G06F 11/34

(54) **PROGRAM**
PROGRAMM
PROGRAMME

(30) Priority: 19.09.2017 JP 2017178531
(43) Date of publication of application: 29.07.2020
(73) Proprietor: Lupine Software LLC., Saitama-shi, Saitama 336-0923 (JP)
(72) Inventor: ASAKA Yasuhiro, Saitama-shi Saitama 336-0923 (JP)
(74) Representative: Müller-Boré & Partner Patentanwälte PartG mbB
(86) International application number: PCT/JP2018/032584
(87) International publication number: WO 2019/058943

(56) References cited:
- WO-A1-2013/018388
- WO-A1-2016/075832
- JP-A- 2013 080 273
- JP-A- 2014 021 528
- JP-A- 2016 063 366
- JP-A- 2017 129 999
- US-A1- 2014 180 828
- US-A1- 2017 032 410
- US-A1- 2017 235 456

## Description

### TECHNICAL FIELD

The present invention relates to a program for calculating a reading completion index indicating the extent to which content has been read by a viewer.

### BACKGROUND ART

In order to optimize websites, website access analysis is performed. In a typical access analysis service, data such as the number of page views (PV counts) obtained by counting the number of times each web page included in the website is browsed is provided to an administrator of the website. Based on the data provided, the administrator of the website can evaluate and improve the composition of the website, the content included in the web page, and the quality of the advertisement content.

In the conventional general access analysis service, the PV count is used as a main evaluation index of the web page. However, in the PV, since one access is counted as one page view regardless of whether the viewer has read the contents of the web page, it cannot be said that the web page having a larger number of PVs is read more firmly. Therefore, it has been proposed to evaluate the quality of content by using a page view reading completion index.

In Patent Document 1, a reading completion index is calculated using a time stamp. More specifically, the time stamp is acquired when various events occur, such as when a web page is opened and closed, and the time interval is used to estimate the time at which the user was reading the content, and the reading completion index is calculated based on whether or not the time is within the reading standard time range for each content.

If the estimated time at which the content was read is outside the reading standard time range, the content is not determined to have been read. For example, if the estimated time for reading the content is very short, such as if the user immediately closes an incorrectly opened web page, the content is not determined to have been read because it is less than the lower limit of the reading standard time range. In addition, when the estimated time for reading the content is extremely long, such as when the web page is left open, the upper limit of the reading standard time range is exceeded, and it is not determined that the content has been read. Patent Document 1 discloses not only calculating the reading completion index of the entire web page, but also calculating each reading completion index by dividing the content into fine units such as paragraphs and lines of the content.

As described above, although a technique for compensating for the weak point of evaluation by the PV count has been proposed, there are cases where an accurate reading completion index cannot be calculated. For example, when a Web page is scrolled at such a speed that the user cannot read the content included in the Web page, an accurate reading completion index cannot be calculated by the method using the time stamp as in Patent Document 1.

Further, for example, when a Web page is browsed by a terminal apparatus having a touch interface such as a smart phone or a tablet PC, a part of the screen may be hidden by a finger or a stylus touching the screen when scrolling the screen, so that the content displayed in the part may not be readable. Further, When scrolling the screen vertically with the touch interface, it is tend that the area below the touched position is not read even if it is visible to the user, and that the screen is read for the first time when scrolled and displayed above the touched position. When the reading completion index is calculated without taking into consideration such an unreadable or unread portion even if displayed on the screen, the calculated reading completion index does not accurately reflect the extent of actual reading.

### PRIOR ART REFERENCES

### PATENT DOCUMENTS

[Patent Document 1] Japanese Patent Application Laid-Open No. 2015-215923

US 2014/180828 A1 relates to an information processing apparatus, an information processing method, an information processing program, and a recording medium having stored therein the information processing program, which can perform control such that a display time of content information for a user is equal to or exceeds a time desired by a provider of the content information, or approaches the desired time as close as possible. The information processing apparatus performs control such that a display time for which content information of a time count target is displayed within a display area is counted, and the content information is continuously or intermittently displayed within the display area until the counted display time exceeds a display guarantee setting value set to the content information of the time count target.

US2 017/235456 A1 relates to an automatic page-editing apparatus which collects information about a tourist spot from each of a plurality of sites and displays the information arranged in block units in one page. The automatic page-editing apparatus determines blocks each displayed as being contained in an area in the page displayed by the display unit when no block in the area is scrolled. Thereafter, the automatic page-editing apparatus calculates attention levels, each of which depends on a time duration when no block is scrolled, of the determined blocks. The automatic page-editing apparatus selects a block to be directly accommodated in the one page in accordance with the calculated attention levels.

US 2017/032410 A1 relates to an information processing device which includes a detecting unit and a predicting unit. The detecting unit detects a move operation to move contents displayed on a display screen of the information processing device. The specifying unit specifies a focused region on which a user is focused for the display screen of the information processing device based on a result of the detection by the detecting unit.

### SUMMARY OF THE INVENTION

### PROBLEMS TO BE SOLVED BY THE INVENTION

In view of such a problem, an object of the present invention is to provide a program capable of calculating a reading completion index with high accuracy.

### Means for Solving the Problems

In order to solve the above-mentioned problems, the program of the present invention causes a computer to realize a function of recording the readable time information by accumulating the readable time in association with each of a plurality of contents displayed by the computer or an external computer. The program is characterized in that it executes a first measurement step for specifying a visible range at a first timing, a second measurement step for specifying a visible range at a second timing after the first timing, a speed calculation step for calculating a scroll speed based on the visible range specified at the first timing and the visible range specified at the second timing, a speed comparison step for comparing a scroll speed with a predetermined threshold, and an accumulation step for increasing a readable time during scrolling when the scroll speed is smaller than the threshold, and for not increasing a readable time during scrolling when the scroll speed is equal to or larger than the threshold are executed.

The present invention further comprises a readable region specifying step for specifying a readable region in the visible range, and in the accumulation step, when the scroll speed is smaller than the threshold value, the readable time corresponding to the content included in the readable region in the visible range during the scrolling is increased.

The computer is provided with a touch panel display and an interface for scrolling a display screen by a sliding operation of a contact position with respect to the touch panel display, and in the readable region specifying step, a non-readable region in a visible range is specified in accordance with the contact position, and a readable region is specified by excluding the non-readable region from the visible range. Further, in the readable region specifying step, a non-readable region in the visible range is specified on the basis of the locus of movement of the contact position, and the non-readable region is specified by excluding the non-readable region from the visible range.

Another program is characterized in that it comprises a collecting step for collecting readable time information recorded from one or a plurality of external computers connected to a computer via a network by accumulating the readable time in association with the content displayed by each external computer, a calculating step for statistically processing the readable time information collected in the collecting step to calculate a reading completion index indicating the extent to which each content has been read, and a presenting step for presenting the reading completion index of each content based on the reading completion index calculated in the calculating step.

Another program is characterized in that it comprises a display step for displaying a plurality of contents on a display screen, a stop timing acquisition step for acquiring a stop timing which is a time at which scrolling of the display screen is stopped when scrolling of the display screen is stopped, a stop period acquisition step for acquiring a stop period which is an elapsed time from the stop of scrolling to the start of scrolling when scrolling is started after the stop time acquisition step, and a recording step for recording a visible range at a timing at which scrolling is stopped, a stop timing, and a stop period in association with each other.

Still another program causes a computer to realize a function of recording readable time information by accumulating the readable time in association with each of a plurality of contents displayed by the computer or an external computer. The program causes a computer to execute a first measurement step for specifying a visible range at a first timing at which a first visible range change event has occurred, a second measurement step for specifying a visible range at a second timing at which a second visible range change event has occurred, and an accumulation step for accumulating a period from the first timing to the second timing as a readable time for content included in the visible range at the first timing.

The visible range change event may include a scroll start event that starts scrolling the visible range, and the second visible range change event may include a scroll stop event that stops scrolling the visible range. Then, when the first visible range change event is a scroll start event and the second visible range change event is a scroll stop event, a speed calculation step of calculating a scroll speed based on the visible range specified at the first timing and the visible range specified at the second timing, and a speed comparison step of comparing the scroll speed with a predetermined threshold value are further executed, and in the accumulation step, when the scroll speed is smaller than the threshold value, the readable time during scrolling is increased, and when the scroll speed is equal to or greater than the threshold value, the readable time during scrolling is not increased.

### BRIEF DESCRIPTION OF THE DRAWINGS

Fig. 1 is a block diagram showing a configuration of a reading completion index calculation system according to an embodiment.
Fig. 2 is a block diagram showing the configuration of the terminal apparatus 20 in the embodiment.
Fig. 3 is a block diagram showing the configuration of the reading completion index calculating apparatus 40 in the embodiment.
Fig. 4 is a flowchart showing the procedure of the readable time information acquisition processing.
Fig. 5 schematically shows a non-readable region R1 and a readable region R2.
Fig. 6 schematically shows the locus of the contact position in the scroll operation on the touch interface.
Fig. 7 is a schematic diagram showing a flow of accumulating the readable time information by the readable time information acquisition processing.

### DESCRIPTION OF EMBODYMENTS

### [First Embodiment]

Hereinafter, a first embodiment of the present invention will be described with reference to the drawings. In the following description, the same members are denoted by the same reference numerals, and the description of the members once described is appropriately omitted.

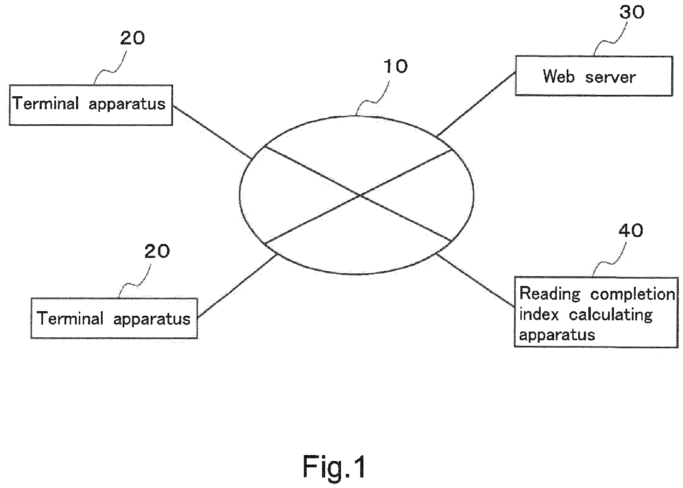

FIG. 1 is a block diagram showing a configuration of a reading completion index calculation system according to the first embodiment. The reading completion index calculation system includes a terminal apparatus 20 and a reading completion index calculation apparatus 40. The terminal apparatus 20 and the reading completion index calculation apparatus 40 are connected to each other via the communication network 10, and are also connected to the web server 30.

The terminal apparatus 20 is hardware capable of displaying contents such as a web page and an electronic book stored in the web server 30. For example, the terminal apparatus 20 is a personal computer, a smart phone, a tablet PC, an electronic book reader, or the like. In the present embodiment, a case where the terminal apparatus 20 is a smart phone will be described as an example.

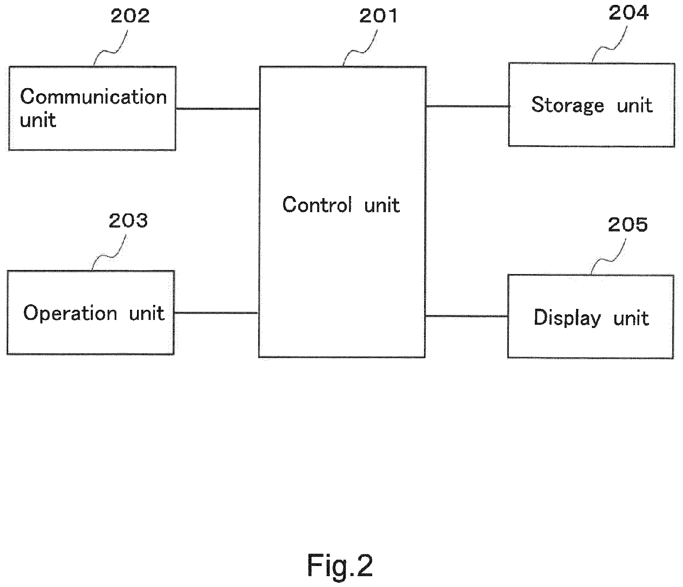

FIG. 2 is a block diagram showing the configuration of the terminal apparatus 20 in the present embodiment. The terminal apparatus 20 includes a control unit 201, a communication unit 202, an operation unit 203, a storage unit 204, and a display unit 205.

The control unit 201 is a processor such as a Central Processing Unit, and controls each unit of the terminal apparatus 20 in accordance with instruction signals inputted from a user. For example, when the user performs an operation for browsing a web page using the operation unit 203, the control unit 201 executes a browser program in accordance with the operation, receives data of the web page from the web server 30, stores the data in the storage unit 204, and displays the data on the display unit 205.

The communication unit 202 manages data communication between the web server 30 and the apparatus that can communicate via the communication network 10. The communication method of the communication unit 202 may be either wireless communication or wired communication.

The operation unit 203 is a device for accepting an input operation from the outside by the user. For example, a touch panel or a physical button (e.g., a home button of a smartphone) may be used.

The storage unit 204 is a rewritable storage device such as an SSD (Solid State Drive), an HDD (Hard Disk Drive), or a RAM (Random Access Memory), for example. The storage unit 204 stores, reads, and writes data in accordance with an instruction from the control unit 201. For example, the storage unit 204 stores data of a web page received from the web server 30 via the communication unit 202. The data of the web page includes a script program (for example, by JavaScript (registered trademark)) for realizing a readable-time information obtaining process to be described later, and the script program is executed on the browsers. The storage unit 204 stores various programs such as a browser program. In addition, the storage unit 204 temporarily stores the readable time information acquired by the readable time information acquisition processing until at least the processing is completed. In the present embodiment, the readable time information is information obtained by associating a readable time of each content (i.e., a time determined to be a readable region (to be described later)) with a content included in a web page browsed by the terminal apparatus 20.

Under the control of the control unit 201, the display unit 205 displays text and image information to the user, on for example, CRTs (Cathode Ray Tube), LCDs (Liquid Crystal Display), OELD (organic electroluminescence display, Organic Electro-Luminescent Display), and the like. As described above, the terminal apparatus 20 includes a touch panel display configured by the touch panel of the operation unit 203 and the display unit 205.

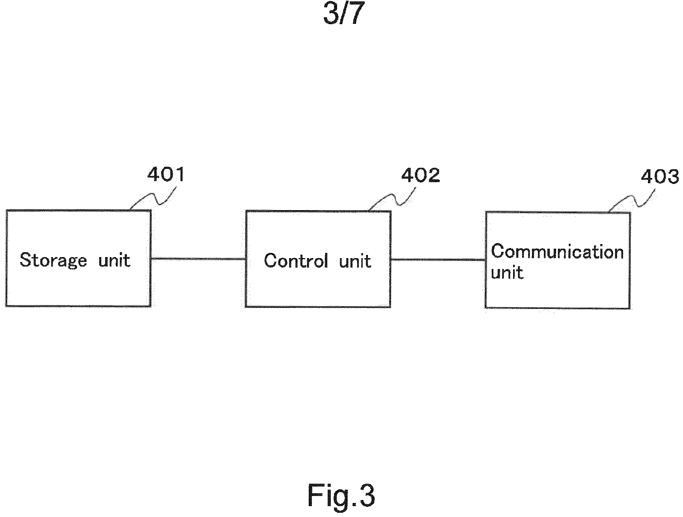

The reading completion index calculation apparatus 40 collects the readable time information transmitted from each terminal apparatus 20 connected to the communication network 10, and statistically calculates a reading completion index for each content included in each web page. It should be noted that although the entire web page may be targeted, it is preferable to target a unit (e.g., a paragraph, a sentence, a character, an image, or the like) obtained by subdividing the web page, and in the following description, it is assumed that the web page is composed of a plurality of elements obtained by subdividing the web page. The reading completion index calculation apparatus 40 is configured in the same manner as a general computer, and includes a storage unit 401 such as a RAM and a ROM, a control unit 402 such as a CPU, and a communication unit 403, as shown in FIG. 3.

The reading completion index calculation apparatus 40 of the present embodiment collects the readable time information of each content included in the web page from a plurality of terminal apparatuses 20, and performs statistical processing based on the collected readable time information to calculate a reading completion index for each content included in the web page. By the reading completion index calculated by the reading completion index calculation apparatus 40, it is possible to grasp how firmly the user has read each content included in the web page, for example, each paragraph of the content body, a still image, and a moving image.

In the reading completion index calculation system configured as described above, the terminal apparatus 20 acquires the readable time information, and the reading completion index calculation apparatus 40 calculates the reading completion index by collecting and statistically processing the readable time information.

### [Readable Time Information Acquisition Process]

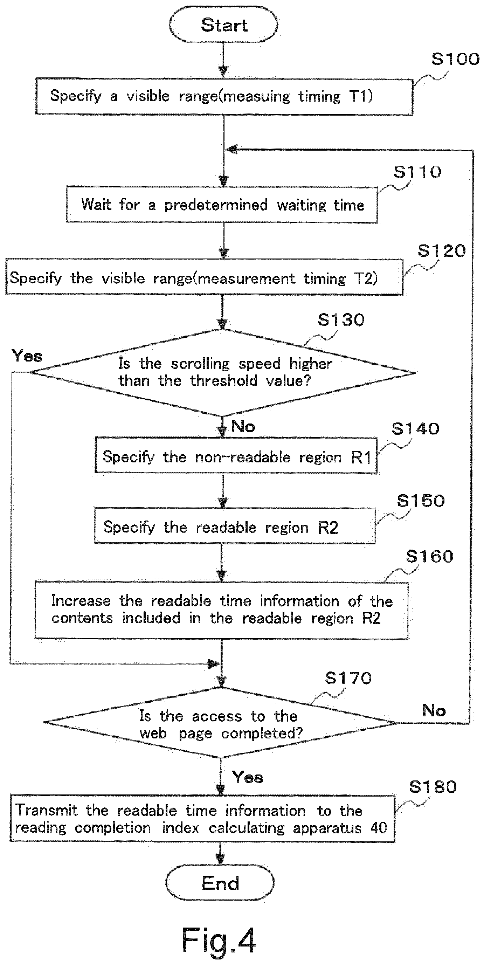

Next, the readable time information acquisition processing realized by the script program executed on the browser in the terminal apparatus 20 will be described. FIG. 4 is a flowchart showing the procedure of the readable time information acquisition processing. The readable time information acquisition processing is started by accessing a web page at the terminal apparatus 20 and executing a script program included in a response of the web page in response to the content of the web page being displayed on the browser. When the processing is started, the readable time information is initialized such that the readable time is 0 for all the contents included in the web page.

First, the terminal apparatus 20 specifies a visible range by the browser (step S100; measuring timing T1). Subsequently, the terminal apparatus 20 waits for a predetermined waiting time (step S110), and advances the process to step S120. The waiting time in the step S110 defines a time interval (this time interval is hereinafter referred to as a "measuring interval") for specifying the visible range by the browser. If the waiting time is short, the frequency of specifying the visible range increases, and the accuracy of the readable time information increases, but the processing load increases. Conversely, if the waiting time is long, the processing load is reduced, but the accuracy of the readable time information is reduced. The waiting time may be determined based on such a trade-off relationship, and may be, for example, about 1 second. In step S120, the terminal apparatus 20 specifies the visible range by the browser (step S120; measurement timing T2). In step S130, the terminal apparatus 20 determines whether the scrolling rate per unit time is equal to or greater than a threshold value.

The scroll speed may be calculated as the amount of scrolled content per unit time. The content amount may be, for example, the number of pixels, the number of characters of the content body, the information amount of the content, or the like, and the scrolled content amount may be obtained from the difference between the visible ranges by the browser at two times. The scroll speed can be obtained by dividing the scrolled content amount by the difference between the two times. The two times for obtaining the scroll speed may be the measurement timings T1 and T2 immediately after the start of the processing. Thereafter, for the steps S120 repeatedly executed within the loops of the process, the two times may be the time of the previous execution of the step S120 (measurement timing Tn-1) and the time of the current execution of the step S120 (measurement timing Tn) (where n is an integer equal to or greater than 3). The threshold of the scroll speed, which is used as a criterion for judgment in the step S130, may be a threshold of the scroll speed at which the user cannot read the contents. In the case where the scroll speed is determined by the number of pixels, it is preferable to use a speed of a limit degree which can be visually recognized by normal dynamic visual acuity as a threshold value. When the scroll speed is determined by the number of characters or the information amount, it is preferable that the threshold value is a speed which is about the limit of the number of characters or the information amount that can be read by a normal user between two times. The threshold value may be set in advance, but it is preferable that the threshold value is automatically calculated and is continuously improved by statistical processing, machine learning, or the like.

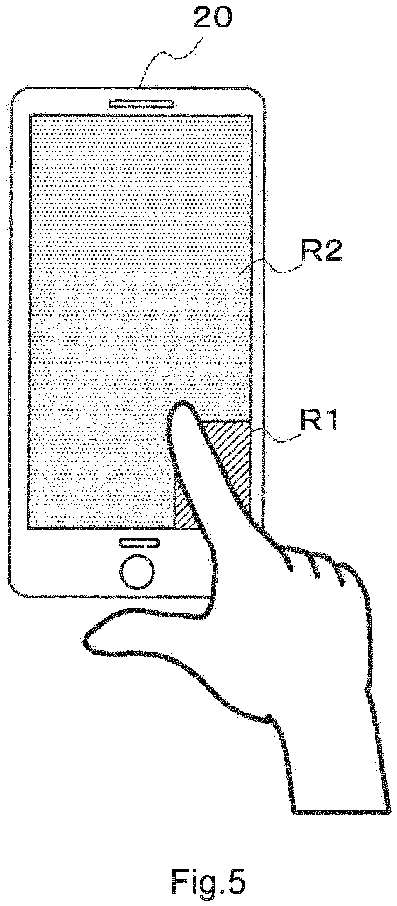

When the scrolling speed is equal to or higher than the threshold (step S130; YES), the terminal apparatus 20 proceeds the process to step S170. On the other hand, when the scrolling speed is smaller than the threshold value (step S130; No), the process proceeds to step S140. Then, the non-readable region R1 is specified (step S140). The non-readable region R1 may be specified on the basis of the position of contact with the screen, which is performed by the user to operate the terminal apparatus. As shown in FIG. 5, the non-readable region R1 of the present embodiment is a visible range on the lower side of the contact position and on the side of the hand in contact with the screen, that is, the right hand in the present embodiment.

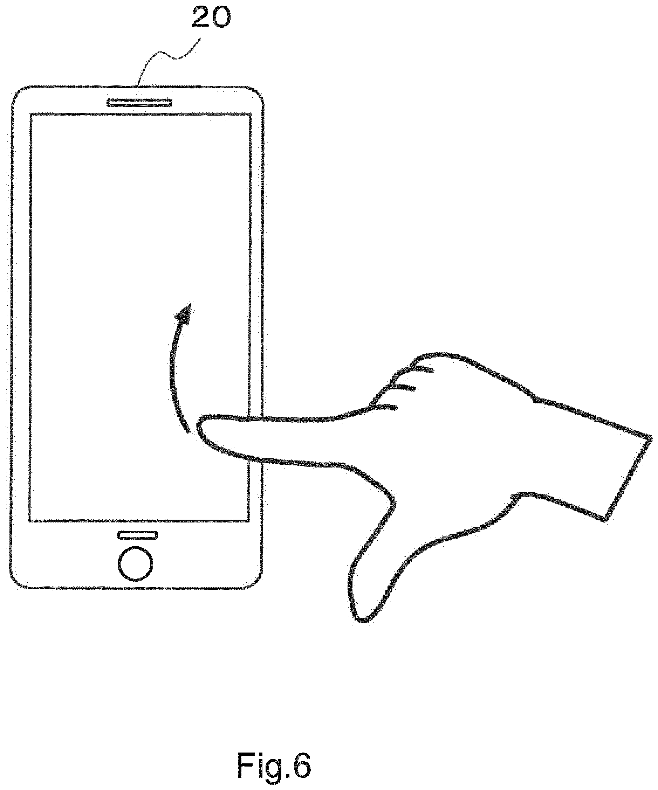

Here, in order to specify the non-readable region R1 as shown in FIG. 5, it is necessary to determine with which hand the user is touching the screen. The terminal apparatus 20 may continuously acquire the contact position to the screen, and determine which hand is in contact with the screen by statistically analyzing the locus of the contact position. Specifically, the terminal apparatus 20 can determine which hand is in contact with the screen based on the scroll direction and whether the locus of the contact position draws a clockwise arc or a counterclockwise arc. For example, when the user scrolls the screen upward with his/her right hand, the locus of the contact position tends to draw a circular arc in the clockwise direction as shown in FIG. 6 in accordance with the rotational movement of the upper extremity about the joint of the right hand such as the finger, wrist, elbow, etc. Conversely, when the screen is scrolled upward with the left hand, an arc is drawn counterclockwise. If the scroll direction is reversed, the rotational direction of the locus is also reversed. Using such a tendency, the terminal apparatus 20 can determine with which hand the user is touching the screen based on the scroll direction and whether the locus of the touch position draws a clockwise arc or a counterclockwise arc. When it is determined which hand is in contact with the screen, the visible range below the contact position and on the hand side in contact with the screen is specified as the non-readable region R1.

Next, the terminal apparatus 20 specifies the readable region R2 by excluding the non-readable region R1 from the area displayed on the screen (step S150). Then, in the readable time information, the terminal apparatus 20 increases the readable time information of the contents included in the readable region R2 specified by the above method by the measurement interval (i.e., the interval between the measurement timings T1 and T2 immediately after the start of the process, and the interval between the measurement timings Tn-1 and Tn thereafter, where n is an integer equal to or greater than 3) (step S160) . At this time, the increase amount of the readable time, that is, the measurement interval, may be a measurement interval calculated by acquiring the time of each measurement timing by a time stamp or the like, or may be a predetermined constant value increased by deeming the measurement interval to be a constant time.

Next, in step S170, the terminal apparatus 20 determines whether the browser has finished accessing the web page. If the access is not completed (step S170; No), the process returns to step S110. Therefore, the series of processes from step S110 to step S170 are repeatedly executed in a cycle depending on the waiting time in step S110 (and the executing time of the respective steps) until the browsers finish accessing the web page. Then, the readable times of the contents included in the readable regions in the repetitively executed steps 5120 are accumulated.

In step S170, when accessing the web page is completed (step S170; YES), the terminal apparatus 20 transmits the readable time information to the reading completion index calculating apparatus 40 (step S180), and ends the readable time information acquiring process.

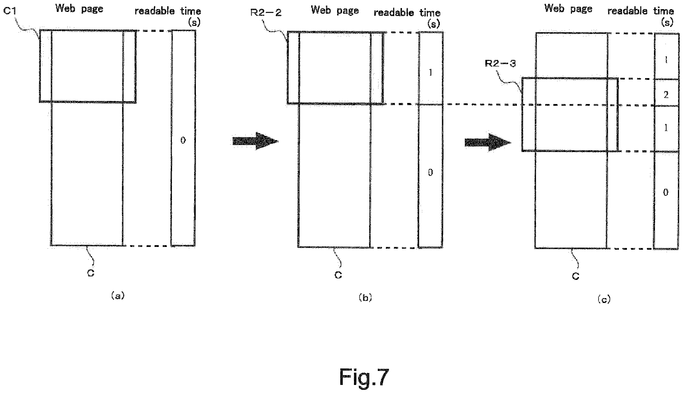

FIG. 7 schematically illustrates a flow of accumulating the readable time information by the above-described readable time information acquisition processing. First, when the user accesses the web page (measurement timing T1), as shown in FIG. 7(a), the terminal apparatus 20 displays the content C1 in a predetermined range of the entire web page C. At the subsequent measurement timing T2, if the user does not scroll the window and the readable region R2-2 is specified as shown in FIG. 7(2), the terminal apparatus 20 increases the readable time corresponding to the contents included in the readable region R2-2 by the time interval between the measurement timings T1 and T2 (here, the measurement interval is 1 millisecond). Subsequently, if the user further scrolls the screen until the next measurement timing T3, and the readable region R2-3 at the measurement timing T3 is specified as shown in FIG. 7(c), the terminal apparatus 20 increases the readable time corresponding to the contents included in the readable region R2-3 by the time interval (1 second) between the measurement timings T2 and T3. As a result, the time interval between T1 and T2 (i.e., 1 second) becomes the readable time for the contents included only in the readable region R2-2. In addition, the time from T1 to T3, i.e., 2 seconds, is the readable time for the contents in the overlapping ranges of the readable regions R2-2 and the R2-3. The time interval between T2 and T3 (i.e., 1 second) is the readable time for the contents included only in the readable region R2-3. In this manner, the user can continue to accumulate the readable time for each content following the operation of reading and advancing the content.

The reading completion index calculating apparatus 40 collects the readable time information from a number of terminal apparatuses 20 connected via the communication network 10, performs statistical processing based on the collected readable time information, and calculates a reading completion index for each content of the web page. Although the statistical processing performed by the reading completion index calculation apparatus 40 is arbitrary, for example, for each content, for each total readable time of a sentence or for each readable time per unit information amount (for example, the number of characters), a variance, a confidence interval or the like is obtained for the distribution, and the reading completion index is calculated for each content based on these values. Alternatively, the correlation between these values may be obtained.

Further, the reading completion index calculation apparatus 40 presents a reading completion index for each content of the web page in response to a request from the administrator of the web page or the like. For example, the reading completion index calculation apparatus 40 may present a reading completion index for each content as numerical data or a graph. Alternatively, the reading completion index for each content may be visualized and presented by displaying a heat map that changes color according to the reading completion index superimposed on the web page, e.g., in a semi-transparent state.

As described above, according to the reading completion index calculation system of the present embodiment, it is possible to calculate and present a reading completion index that reflects with high accuracy how firmly each content has been read.

### [Second Embodiment]

Next, a reading completion index calculation system according to the second embodiment will be described. The hardware configuration of the reading completion index calculation system of the second embodiment is the same as that of the first embodiment shown in FIG. 1. In the reading completion index calculation system of the second embodiment, the sharing of processing by the terminal apparatus 20 and the reading completion index calculation apparatus 40 is different from that of the first embodiment, and the data accumulated by the terminal apparatus 20, the method of acquiring the scroll speed, and the like are also different from those of the first embodiment. Hereinafter, these differences will be described in detail, and the description of the common components with the first embodiment will be omitted.

In the second embodiment, the terminal apparatus 20 measures the total display time from the timing at which the browser starts to display the web page, and the time displayed as a readable range (i.e., the time until the next visible range change event occurs, for example, the time from the scroll stop to the next scroll start) for the content included in the visible range using an event (hereinafter, collectively referred to as a visible range change event) for changing the visible range by the browser such as the start or stop of scrolling as a trigger by the script program executed on the browser. The visible range change events include, for example, but are not limited to, starting and stopping scrolling, changing display magnification, changing window size, starting and ending full screen display, changing font size, switching tabs, switching visible/invisible, etc. The control unit 201 realizes a first timer for counting the total display time and a second timer for counting the time elapsed from the occurrence of the immediately preceding visible range change event, for example, the time elapsed from the stop of scrolling. Then, the terminal apparatus 20 records the total display time at the timing at which the next display change event (for example, the start of scrolling) occurs and the elapsed time (for example, the scroll stop time) from the occurrence of the immediately preceding display change event in association with each other. In addition, information such as the size of the entire web page to be displayed and the size of the visible range (viewport) of the browser is also recorded in association with the elapsed time from the occurrence of the immediately preceding display change event. These pieces of information are recorded in a storage area called a queue secured in the storage unit 204 of the terminal apparatus 20. The queue is a storage area for temporarily recording data under the management of the browser.

The terminal apparatus 20 transmits the data accumulated in the queue to the reading completion index calculation apparatus 40 periodically and in response to a user operation event as a trigger. The reading completion index calculating apparatus 40 analyzes the data received from each terminal apparatus 20 to calculate a reading completion index.

Hereinafter, a specific process at the time of browsing a web page will be described. Upon completion of downloading the data of the web page from the web server 30 and generating the screen (so-called rendering) for displaying, the terminal apparatus 20 starts counting time by the first timer to count the total display time of the web page. The display start of the web page is the first visible range change event in the display of the web page. Further, the terminal apparatus 20 specifies visible range information indicating an initial visible range by the browser, and starts counting time by the second timer in order to count the time of stopping at the position while maintaining the visible range. The visible range information is expressed as data based on a combination of the first paragraph displayed on the browser and the number of paragraphs displayed. For example, when the first to seventh paragraphs are displayed in the initial visible range, the visible range information is expressed as [1, 7]. By such expression, the data amount of the visible range information can be suppressed. The paragraphs displayed on the browser may be specified as tags (so-called p-tags) indicating paragraphs in HTML(Hypertext Markup Language files describing web pages, which are included in the visible range of the browser.

Upon detecting a visible range change event (e.g., start of scrolling) that changes the visible range from the initial visible range, the terminal apparatus 20 stops counting by the second timer, and stores in the queue the stop occurrence time counted by the first timer (zero for the initial visible range), the elapsed time from the first visible range change event counted by the second timer (i.e., stopping time), the visible range generated by the first visible range change event (i.e., visible range at the time of stop), the overall size of the web page, and the size of the visible range (viewport) of the browser in association with each other.

Next, when a new visible range change event (e.g., stop of scrolling) occurs, the time counted by the first timer is acquired as the occurrence time of the visible range change event. In addition, the terminal apparatus 20 specifies visible range information (e.g., visible range information at the scroll stop position) generated by the new visible range change event, and starts counting by the second timer in order to count the time during which the visible range is maintained.

Thereafter, when further detecting the next visible range change event, the terminal apparatus 20 stops counting time by the second timer, and stores in the queue the time of one previous visible range change event obtained from the first timer occurs, the elapsed time from the one previous visible range change event that is counted by the second timer, the visible range generated by the one previous visible range change event, the entire size of the web page, and the size of the visible range of the browser (viewport) in association with each other.

By repeating such processing, data such as a stop occurrence time, a stop time, a visible range, and the like are accumulated in the queue for each period in which the scroll is stopped.

In addition to the above-described processing, the terminal apparatus 20 may specify a non-readable region which is included in the visible range in the scroll stop state but which is treated as not being read similarly to the first embodiment, and may also store the non-readable region in the queue.

The terminal apparatus 20 transmits the data stored in the queue to the reading completion index calculation apparatus 40 periodically, for example, once every five minutes. In addition to the periodic timing, the terminal apparatus 20 transmits the data accumulated in the queue to the reading completion index calculation apparatus 40 even when a predetermined event such as when the web page is hidden (e.g., when the window is closed, minimized, or when the tab is changed) occurs. When the web page is not displayed, the terminal apparatus 20 may stop counting the first timer and the second timer.

Upon receiving the data transmitted from the terminal apparatus 20, the reading completion index calculating apparatus 40 calculates a reading completion index based on the received data. In the calculation of the reading completion index, a so-called cleansing process for removing unnecessary data or arranging the data in a format that facilitates statistical processing is performed. Then, based on the data after the cleansing process, for each period in which the scroll is stopped, the reading completion index is calculated on the assumption that the visible range which has been readable has been read for the scroll stop time. The period between each period when scrolling was stopped is the scrolling period, and the reading completion index calculating apparatus 40 obtains the scrolling speed in the scrolling period. Specifically, the scroll speed may be obtained by obtaining the scroll amount in the scrolling period from the visible range of the scroll stop period before and after the scrolling period, and dividing the scroll amount by the time in the scrolling period. Then, when the scroll speed is equal to or higher than the threshold value, the reading completion index calculating apparatus 40 calculates the reading completion index on the assumption that the visible range being scrolled (i.e., the portion between the visible ranges in the preceding and following stop periods) is unreadable. On the other hand, when the scroll speed is smaller than the threshold value, the reading completion index is calculated on the assumption that the visible range during scrolling is readable. Note that the reading completion index calculation apparatus 40 may be configured to automatically calculate a threshold value to be compared with the scroll speed by performing statistical processing or the like on data collected from each terminal apparatus 20 in the past.

In this manner, the reading completion index calculation apparatus 40 calculates the reading completion index based on the data received from the terminal apparatus 20. The reading completion index calculation apparatus 40 may calculate the reading completion index by a so-called on-line algorithm in order to calculate the reading completion index in which the latest data is reflected in the past without performing the recalculation based on all the collected data. By doing so, it is possible to calculate a reading completion index with higher accuracy while optimizing the threshold value and the like based on the latest data. The threshold value of the scroll speed may also be calculated by an online algorithm and updated as needed.

In addition to the above-described calculation of the reading completion index, the reading completion index calculation apparatus 40 may derive whether or not the sentence of the web page has been read throughout (for example, whether or not there is a portion which has been skipped or is not in a readable state by using a record such as the above-described scroll speed) at the time of browsing the web page. Then, a unique key is given to a series of data measured by the terminal apparatus 20 and transmitted to the reading completion index calculation apparatus 40 while maintaining anonymity of the reader, and this key is included in each transmission, so that the reader corresponding to the collected data can be identified. This makes it possible to extract only the data of the reader who has read all the sentences carefully, for example, a sentence such as a novel that is completely read from the beginning to the end. In addition, it is also possible to grasp portions of the sentence that takes too long to be read in comparison with the amount of a sentence, and to evaluate the quality of the sentence, using only the records of readers who have read the entire sentence.

Although each embodiment of the present invention has been described above, the present invention is not limited to this example. For example, in each of the embodiments described above, the case where the terminal apparatus 20 is a smart phone has been described as an example, but the terminal apparatus 20 may be a tablet PC, an electronic book reader, a desktop PC, or the like. When the terminal apparatus does not have a touch interface, or when a mouse and a touch interface are used in combination, the mouse cursor position locus may be used as an auxiliary to estimate the reading completion position and to assist in specifying the readable region. Alternatively, the process of excluding the non-readable regions and specifying the readable regions may be omitted.

In addition, a camera for detecting the direction of the sight line of the user may be provided in the terminal apparatus 20, and the readable region R2 may be specified based on the direction of the sight line detected using the camera.

Further, in each of the embodiments described above, when the non-readable region is specified, the visible range on the lower side than the contact position and on the hand side in contact with the screen is set as the non-readable region, but the non-readable region may be specified by different way. For example, without determining the hand in contact with the screen, all the visible ranges below or above the contact position may be set as the non-readable regions. In addition, when the contact position is in the region of the upper half of the screen, the upper side of the contact position may be a non-readable region, and when the contact position is in the region of the lower half of the screen, the lower side of the contact position may be a non-readable region.

### Reference Signs List

- 10: Communications network
- 20: Terminal apparatus
- 30: Web server
- 40: Reading completion index calculating apparatus

## Claims

1. A program comprising instructions which, when the program is executed by a computer, cause the computer (20) to realize a function of recording readable time information by accumulating the readable time in association with each of a plurality of contents displayed by the computer (20) or an external computer, wherein
the program causes the computer to execute:
a first measurement step (S100) for specifying a visible range at a first timing (T1);
a second measurement step (S120) for specifying a visible range at a second timing (T2) after the first timing (T1);
a speed calculation step for calculating a scroll speed based on the visible range specified at the first timing (T1) and the visible range specified at the second timing (T2);
a speed comparison step (S130) for comparing a scroll speed with a predetermined threshold; and
a readable region specifying step (S140; S150) for specifying a readable region in the visible range;
an accumulation step (S160) for increasing a readable time during scrolling when the scroll speed is smaller than the threshold, and for not increasing a readable time during scrolling when the scroll speed is equal to or larger than the threshold,
wherein the computer (20) is equipped with a touch panel display and an interface for scrolling a display screen by a sliding operation of a contact position with respect to the touch panel display,
wherein in the readable region specifying step (S140; S150), determination of a hand with which of a user is touching the screen is performed based on whether of a locus of the touch position draws a clockwise arc or a counterclockwise arc, a non-readable region (R1) in the visible range is specified based on the result of the determination, and the readable region (R2) is specified by excluding the non-readable region (R1) from the visible range;
wherein in the accumulation step (S160), when the scroll speed is smaller than the threshold value, the readable time corresponding to the content included in the readable region in the visible range during the scrolling is increased.

## Patentansprüche

1. Programm, umfassend Anweisungen, die, wenn das Programm durch einen Computer ausgeführt wird, den Computer (20) veranlassen, eine Funktion des Aufzeichnens von Informationen über lesbare Zeit durch Akkumulieren der lesbaren Zeit in Zuordnung zu jeder einer Mehrzahl von durch den Computer (20) oder einen externen Computer angezeigten Inhalten zu realisieren, wobei das Programm den Computer veranlasst, auszuführen:
einen ersten Messschritt (S100) zum Ermitteln eines sichtbaren Bereichs zu einem ersten Zeitpunkt (T1);
einen zweiten Messschritt (S120) zum Ermitteln eines sichtbaren Bereichs zu einem zweiten Zeitpunkt (T2) nach dem ersten Zeitpunkt (T1);
einen Geschwindigkeitsberechnungsschritt zum Berechnen einer Scroll-Geschwindigkeit basierend auf dem zu dem ersten Zeitpunkt (T1) ermittelten sichtbaren Bereich und dem zu dem zweiten Zeitpunkt (T2) ermittelten sichtbaren Bereich;
einen Geschwindigkeitsvergleichsschritt (S130) zum Vergleichen einer Scroll-Geschwindigkeit mit einem vorbestimmten Schwellenwert; und
einen Schritt des Ermittelns einer lesbaren Region (S140; S150) zum Ermitteln einer lesbaren Region in dem sichtbaren Bereich;
einen Akkumulationsschritt (S160) zum Erhöhen einer lesbaren Zeit beim Scrollen, wenn die Scroll-Geschwindigkeit kleiner ist als der Schwellenwert, und zum Nicht-Erhöhen einer lesbaren Zeit beim Scrollen, wenn die Scroll-Geschwindigkeit gleich oder größer ist als der Schwellenwert,
wobei der Computer (20) mit einer Berührungstafelanzeige und einer Schnittstelle zum Scrollen eines Anzeigebildschirms durch einen Verschiebevorgang einer Kontaktposition in Bezug auf die Berührungstafelanzeige ausgestattet ist,
wobei in dem Schritt des Ermittelns einer lesbaren Region (S140; S150) eine Bestimmung einer Hand, mit der ein Nutzer den Bildschirm berührt, basierend darauf erfolgt, ob ein Ort der Berührungsposition einen Bogen im Uhrzeigersinn oder einen Bogen gegen den Uhrzeigersinn zeichnet, eine nichtlesbare Region (R1) in dem sichtbaren Bereich basierend auf dem Ergebnis der Bestimmung ermittelt wird und die lesbare Region (R2) durch Ausschließen der nichtlesbaren Region (R1) aus dem sichtbaren Bereich ermittelt wird;
wobei in dem Akkumulationsschritt (S160), wenn die Scroll-Geschwindigkeit kleiner ist als der Schwellenwert, die lesbare Zeit erhöht wird, die dem Inhalt entspricht, der in der lesbaren Region in dem sichtbaren Bereich während des Scrollens enthalten ist.

## Revendications

1. Programme comprenant des instructions qui, lorsque le programme est exécuté par un ordinateur, amènent l'ordinateur (20) à réaliser une fonction d'enregistrement d'informations temporelles lisibles en accumulant le temps lisible en association avec chacun d'une pluralité de contenus affichés par l'ordinateur (20) ou un ordinateur externe,
dans lequel le programme amène l'ordinateur à exécuter :
une première étape de mesure (S100) pour spécifier une étendue visible à un premier moment (T1) ;
une seconde étape de mesure (S120) pour spécifier une étendue visible à un second moment (T2) après le premier moment (T1) ;
une étape de calcul de vitesse pour calculer une vitesse de défilement basée sur l'étendue visible spécifiée au premier moment (T1) et l'étendue visible spécifiée au second moment (T2) ;
une étape de comparaison de vitesse (S130) pour comparer une vitesse de défilement à un seuil prédéterminé ; et
une étape de spécification de région lisible (S140 ; S150) pour spécifier une région lisible dans l'étendue visible ;
une étape d'accumulation (S160) pour augmenter un temps lisible au cours du défilement lorsque la vitesse de défilement est inférieure au seuil, et pour ne pas augmenter un temps lisible au cours du défilement lorsque la vitesse de défilement est supérieure ou égale au seuil,
dans lequel l'ordinateur (20) est équipé d'un affichage à écran tactile et d'une interface pour faire défiler un écran d'affichage par une opération de coulissement d'une position de contact par rapport à l'affichage à écran tactile,
dans lequel dans l'étape de spécification de région lisible (S140 ; S150), la détermination d'une main avec laquelle un utilisateur touche l'écran est réalisée en fonction du fait qu'un locus de la position tactile dessine un arc dans le sens horaire ou un arc dans le sens antihoraire, une région non lisible (R1) dans l'étendue visible est spécifiée en fonction du résultat de la détermination, et la région lisible (R2) est spécifiée en excluant la région non lisible (R1) de l'étendue visible ;
dans lequel dans l'étape d'accumulation (S160), lorsque la vitesse de défilement est inférieure à la valeur seuil, le temps lisible correspondant au contenu inclus dans la région lisible dans l'étendue visible au cours du défilement est augmenté.
